# EUROPÄISCHE PATENTSCHRIFT

(11) **EP 3 730 709 B1**
(45) Veröffentlichungstag und Bekanntmachung des Hinweises auf die Patenterteilung: **30.10.2024**
(21) Anmeldenummer: 20170972.2
(22) Anmeldetag: 23.04.2020
(51) Int. Cl.: E04B 1/10, B27F 1/16, E04B 2/70, E04C 2/12, E04C 2/38

(54) **WANDELEMENT FÜR EINEN HOLZRAHMENBAU**
WALL ELEMENT FOR WOOD FRAME CONSTRUCTION
ÉLÉMENT MURAL POUR UN CADRE EN BOIS

(30) Priorität: 25.04.2019 AT 5007519 U
(43) Veröffentlichungstag der Anmeldung: 28.10.2020
(73) Patentinhaber: Daxberger Holding GmbH, 4850 Timelkam (AT)
(72) Erfinder: Daxberger, Reinhard, 4863 Seewalchen am Attersee (AT)
(74) Vertreter: Fabian, Ferdinand

(56) Entgegenhaltungen:
- WO-A1-2019/025605
- CH-A- 462 438
- DE-A1- 2 004 258
- DE-A1- 2 056 920
- DE-U1- 7 734 929
- FR-A2- 2 558 871
- IT-A1- MO20 100 313

## Beschreibung

Die Erfindung betrifft ein Wandelement für einen Holzrahmenbau umfassend einen Rahmen aus in Rahmenecken miteinander verbundenen Profilholz-Elementen.

Die Erfindung betrifft auch ein Baumodul umfassend einen Modulkörper mit mehreren Rahmen aus in Rahmenecken 6 miteinander verbundenen Profilholz-Elementen.

Weiter betrifft die Erfindung ein Verfahren zur Herstellung eines Wandelements für einen Holzrahmenbau, nach dem ein Rahmen aus Profilholz-Elementen durch Verbindung der Profilholz-Elemente in Rahmenecken hergestellt wird.

Der Holzrahmenbau ist eine weit verbreitete Variante des Fertigteilhausbaus. Dabei werden üblicherweise die Wände des Fertigteilhauses in einem Unternehmen möglichst vollständig vorgefertigt, sodass auf der Baustelle die Wände nur mehr miteinander verbunden werden müssen. Die Fertigungstiefe ist dabei durchaus unterschiedlich. Für die Hauswände werden Wandelemente aus einem Rahmen hergestellt, der üblicherweise beidseitig mit einer Beplankung versehen wird. Die Art der Beplankung kann sich u.a. auch an Kundenwünschen orientieren. Der Rahmen wird üblicherweise aus Kanthölzern hergestellt, die über genagelte, stumpfe Holzanschlüsse miteinander verbunden werden. Da die einzelnen Wandelemente möglichst weit vorgefertigt sein sollen und in diesem Fertigungsgrad transportiert werden müssen, sind der Größe der Wandelemente nicht nur aufgrund der Abmessungen, sondern auch aufgrund des höchst zulässigen Gewichts, das normalerweise auf Straßen transportiert werden darf, Grenzen gesetzt.

Das Dokument DE 20 56 920 A1 offenbart ein Wandelement gemäß dem Oberbegriff des Anspruchs 1.

Der vorliegenden Erfindung liegt die Aufgabe zugrunde, eine Möglichkeit zu schaffen, mit der das Gewicht eines Wandelements für einen Holzrahmenbau reduziert werden kann. Die Aufgabe der Erfindung wird einerseits bei dem eingangs genannten Wandelement dadurch gelöst, dass die Verbindung der Profilholz-Elemente in den Rahmenecken als Zinkenverbindung, insbesondere Keilzinkenverbindung, ausgeführt ist.

Mit dem eingangs genannten Baumodul wird die Aufgabe dadurch gelöst, dass die Verbindung der Profilholz-Elemente in den Rahmenecken als Zinkenverbindung, insbesondere Keilzinkenverbindung, ausgeführt ist.

Weiter wird die Aufgabe der Erfindung mit dem eingangs genannten Verfahren gelöst, nach dem vorgesehen ist, dass die Verbindung der Profilholz-Elemente in den Rahmenecken als Zinkenverbindung, insbesondere Keilzinkenverbindung, ausgeführt wird.

Von Vorteil ist dabei, dass durch die (Keil-)Zinkenverbindungen die mechanische Belastbarkeit des Wandelementes verbessert werden kann, insbesondere die Bruchfestigkeit der Verbindung der Profilholz-Elemente. Dies wiederum ermöglicht bei gleichbleibenden Dimensionen des jeweiligen Wandelementes die Verwendung von dünneren Profilholz-Elementen, womit das zu transportierende Gewicht reduziert werden kann. Bei einem ganzen Haus können damit bis zu 30 % Transportgewicht eingespart werden. Dies ermöglicht umgekehrt aber auch die Ausbildung von größeren Wandelementen, sodass die Anzahl der notwendigen LKW-Ladungen reduziert werden kann. Andererseits ermöglicht diese Rahmenbauweise aber auch eine Erhöhung der von dem Wandelement aufnehmbaren Last, wenn die Dimensionen der Profilholz-Elemente gleich belassen werden.

Gemäß der Erfindung ist vorgesehen, dass die Zinkenverbindung quer zur Faserrichtung des Holzes der Profilholz-Elemente ausgebildet ist. Es kann damit eine weitere Erhöhung der von dem Wandelement aufnehmbaren statischen Last erreicht werden.

Gemäß der Erfindung ist zudem vorgesehen, dass die Zinkenverbindungen mehrere Lamellen pro Profilholz-Element aufweisen, wobei eine Lamellendicke ausgewählt ist aus einem Bereich von 2 mm bis 10 mm. Obwohl damit die Zinkenverbindung in der Herstellung aufwändiger und insbesondere im Bereich der unteren Grenze bruchanfälliger ist, kann durch die relativ dünnen Lamellen eine weitere Verbesserung der Verbindungsfestigkeit der Eckverbindungen der Profilholz-Elemente durch die Erhöhung der Oberfläche der Verbindung erreicht werden.

Weiterhin ist vorgesehen, dass die Zinkenverbindungen auf Gehrung geschnittene Profilholz-Elemente oder Lamellen aufweisen. Es ist damit einfacher möglich, dass eine zusätzliche Verbindung von zwei aneinander angrenzenden Profilholz-Elementen über ein Beplankungselement des Rahmens ausgebildet werden kann.

Zur Reduktion der Bruchgefahr der Lamellen bei der Herstellung des Zinkenverbindung kann gemäß einer Ausführungsvariante des Wandelementes vorgesehen werden, dass die Lamellen der Zinkenverbindungen jeweils in Form eines Trapezes oder Vierecks (in Draufsicht betrachtet) ausgeführt sind, also keine Spitze aufweisen.

Nach einer anderen Ausführungsvariante des Wandelementes kann vorgesehen sein, dass die Lamellen eine viereckige Querschnittsform aufweisen, wodurch eine weitere Verbesserung der Verbindungsfestigkeit erreicht werden kann.

Zum besseren Verständnis der Erfindung wird diese anhand der nachfolgenden Figuren näher erläutert.

Es zeigen jeweils in vereinfachter, schematischer Darstellung:
- Fig. 1: ein Wandelement für einen Holzrahmenbau;
- Fig. 2: einen Ausschnitt aus zwei Profilholz-Elementen für den Rahmen des Wandelementes;
- Fig. 3: ein Eckverbindung des Rahmens für das Wandelement;
- Fig. 4: eine nicht erfindungsgemäße Ausführungsvariante der Eckverbindung;
- Fig. 5: eine weitere nicht erfindungsgemäße Ausführungsvariante der Eckverbindung;
- Fig. 6: eine Ausführungsvariante der Eckverbindung als Keilzinkenverbindung;
- Fig. 7: einen Ausschnitt aus einer Keilzinkenverbindung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

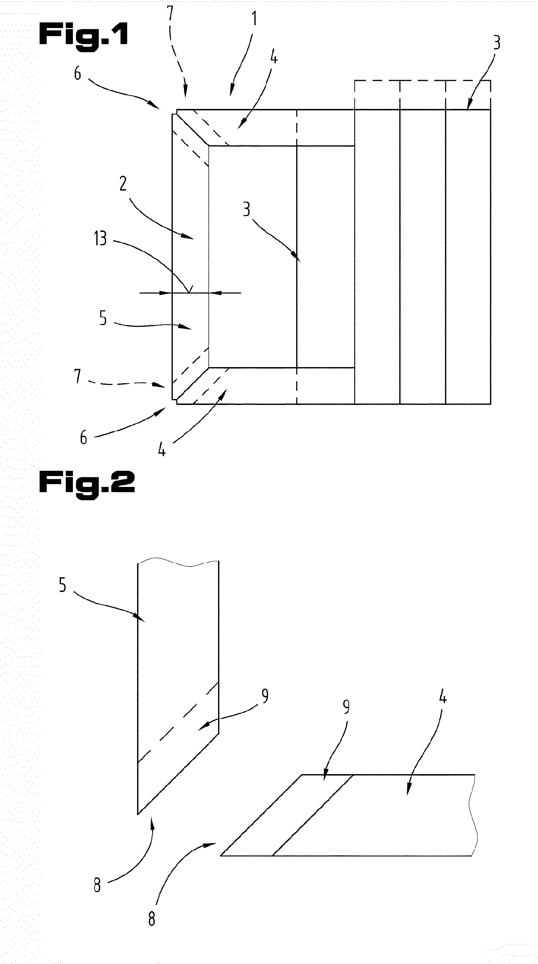

In Fig. 1 ist ein Wandelement 1 für einen Holzrahmenhausbau (auch als Holzriegelbau bezeichenbar) dargestellt. Das Wandelement 1 umfasst einen Rahmen 2. Auf zumindest einer Seite, bevorzugt beidseitig, ist an dem Rahmen 2 eine Beplankung 3 befestigt. In der dargestellten Ausführungsvariante weist das Wandelement 2 beidseitig eine Beplankung 3 auf, wobei diese teilweise entfernt ist, um eine bessere Darstellung des Rahmens 2 zu ermöglichen. Dies bedeutet jedoch nicht, dass die Beplankung(en) 3 nicht die gesamte vom Rahmen 2 aufgespannte Vorderfläche und/oder Rückfläche bedeckt, wie dies an sich bekannt ist.

Die Beplankung 3 kann mehrere Beplankungselemente aufweisen, beispielsweise Holzbretter, gegebenenfalls mit Nut und Feder, Holzwerkstoffplatten, Gipskartonplatten, etc.

Weiter kann zumindest eine der Beplankungen 3 ein oder mehrschichtig ausgeführt sein.

Zudem besteht die Möglichkeit, dass die Beplankung(en) 3 über den Rahmen 2 zumindest einseitig vorragend angeordnet sind.

Der Rahmen 2 wird von mehreren horizontalen und vertikalen Profilholz-Elemente 4, 5 gebildet, die an Rahmenecken 6 miteinander verbunden sind. Dabei bilden die horizontalen Profilholz-Elemente 4 die Schwelle bzw. den Riegel und die vertikalen Profilholz-Elemente 5 die Ständer des Rahmens 2.

Die Profilholz-Elemente 4, 5 sind im einfachsten Fall als Kanthölzer ausgebildet. Sie können aber auch eine komplexere Querschnittsform aufweisen, beispielsweise mit Nuten zur Aufnahme von Dichtelementen versehen sein. Generell sind die Profilholz-Elemente 4, 5 als Vollholz-Elemente ausgebildet.

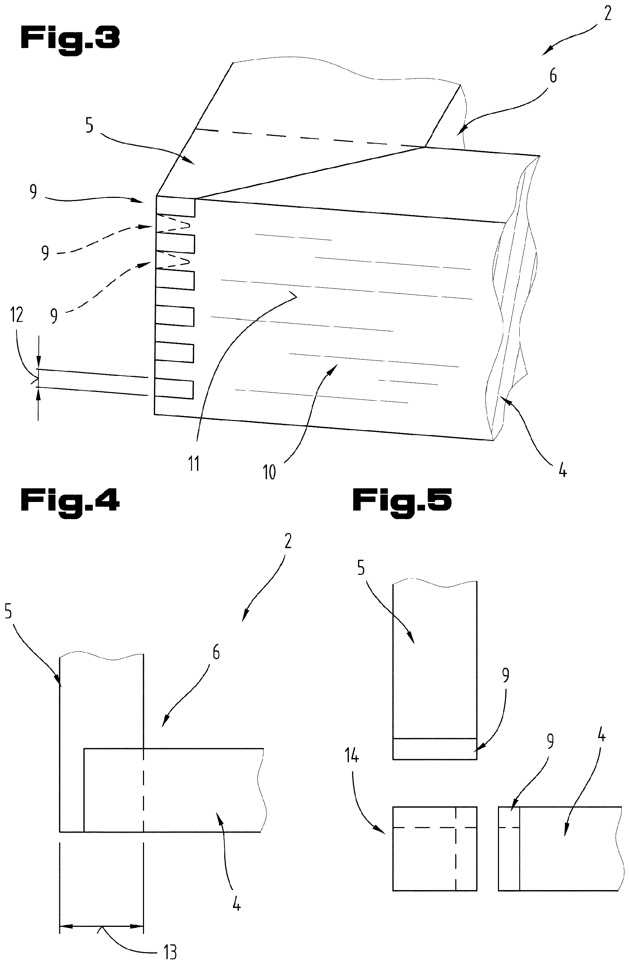

Die Verbindung der Profilholz-Elementen 4, 5 in den Rahmenecken 6 ist als Zinkenverbindung ausgeführt. Dazu können die Profilholz-Elemente 4, 5 in den Rahmenecken 6 mit einem Überlappungsbereich 7 ausgeführt sein. In diesen Überlappungsbereichen 7 - bevorzugt sind alle Zinkenverbindungen in den Rahmenecken 6 des Rahmens 2 gleich ausgeführt - weisen die Profilholz-Elemente 4, 5 an Stirnseiten 8 mehrere Lamellen 9 auf, wie dies aus Fig. 2 ersichtlich ist. Zwischen den Lamellen 9 sind jeweils Nuten ausgebildet. Die Lamellen 9 sind so angeordnet, dass die Lamellen 9 des horizontalen Profilholz-Elementes 4 in die Nuten des vertikalen Profilholz-Elementes 5 und die Lamellen 9 des vertikalen Profilholz-Elementes 5 in die Nuten des horizontalen Profilholz-Elementes 4 eingeschoben werden können, sodass im zusammengebauten Zustand die Zinkenverbindung entsteht, wie diese beispielshaft in Fig. 3 gezeigt ist.

Zur Herstellung der Zinkenverbindung werden die Lamellen 9 des vertikalen und horizontalen Profilholz-Elementes 4, 5 miteinander verleimt. Es kann hierzu ein üblicher, für Holz geeigneter Industrieleim, beispielsweise ein Leim auf PU-Basis, verwendet werden.

Bevorzugt sind die Profilzholz-Elemente 4, 5 in den Rahmenecken 6 ausschließlich über die Zinkenverbindungen miteinander verbunden, d.h. dass also keine weitere Verbindungselemente, wie z.B. Nägel oder Schrauben, vorhanden sind.

Die Profilholz-Elemente 4, 5 werden so ausgewählt, dass die Zinkenverbindungen quer zur Faserrichtung des Holzes der Profilholz-Elemente 4, 5 ausgebildet ist. Wie in Fig. 3 angedeutet, werden dazu Profilholz-Elemente 4, 5 eingesetzt, deren Holzfasern 10 zumindest annähernd in Längsrichtung der Profilholz-Elemente 4, 5 verlaufen.

Gemäß der Erfindung sind die Profilholz-Elemente 4, 5 bzw. die Lamellen 9 auf Gehrung (Gehrungswinkel 45 °) geschnitten ausgebildet, wie dies ebenfalls aus den Fig. 1 bis 3 ersichtlich ist. Die Lamellen 9 können dabei rhomboidförmig (in Draufsicht betrachtet) ausgebildet sein.

Die Lamellen 9 können aber auch eine andere Form (in Draufsicht betrachtet) aufweisen, beispielsweise dreieckförmig oder trapezförmig ausgebildet sein, wie dies in Fig. 3 strichliert angedeutet ist. Für die trapezförmige Ausbildung können die Lamellen 9 auch mit dreieckiger Form (in Draufsicht betrachtet) hergestellt werden, und in einem zweiten Schritt die Spitzen an einem Ende entfernt werden. Dies erfolgt bevorzugt nach dem Verkleben der Lamellen 9 der Profilholz-Elemente 4, 5 miteinander. Es können aber auch Spitzen der rhomboidförmigen Ausbildung der Lamellen entfernt werden.

Durch die Entfernung der Spitzen der Lamellen 9 ist die Gehrung nicht genau am Übergang von einem horizontalen Profilholz-Element 4 in ein vertikales Profilholz-Element 5 ausgebildet, sondern versetzt dazu. Damit kann beispielsweise das vertikale Profilholz-Element 5 auch einen Teil einer unteren Seitenfläche 11 des Rahmens 2 bilden, wie dies aus Fig. 3 ersichtlich ist.

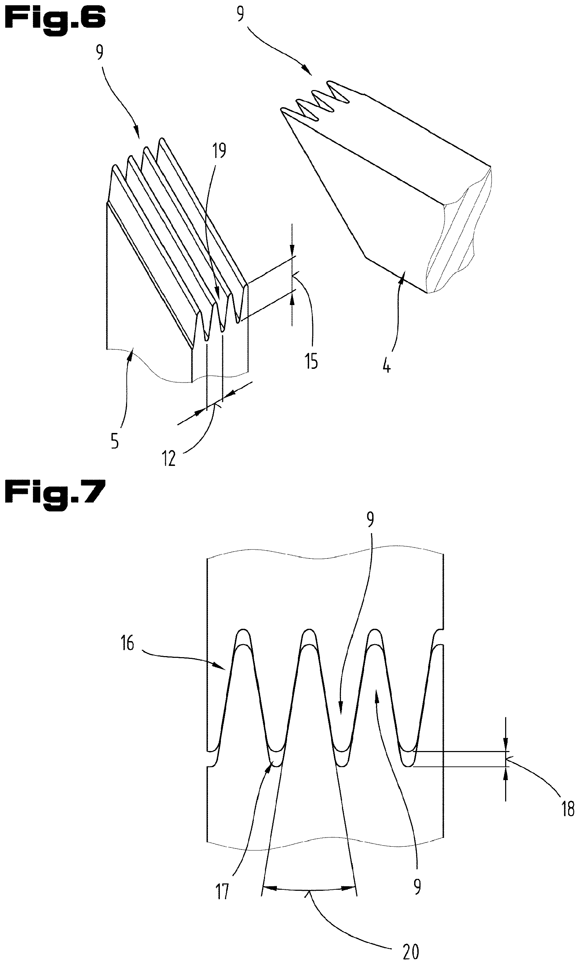

Die Zinkenverbindungen der Profilholz-Elemente 4, 5 sind bevorzugt als Keilzinkenverbindung ausgeführt. Dazu können die Lamellen 9 einen dreieckförmigen Querschnitt aufweisen (in Stirnseitenansicht), wie dies in Fig. 3 strichliert angedeutet ist. Die Spitzen der Dreiecke können auch mit einer Rundung versehen sein, wie dies aus Fig. 6 zu ersehen ist. Ebenso können die Übergänge zwischen den Zinken gerundet ausgeführt sein, wie dies ebenfalls die Fig. 6 zeigt.

Gemäß einer Ausführungsvariante des Wandelementes 1 können die Lamellen 9 jedoch auch eine viereckige, insbesondere rechteckförmige, Querschnittsform aufweisen, wie dies ebenfalls aus Fig. 3 ersichtlich ist. Je nach Form der Lamellen 9 kann dabei die Querschnittsfläche über die Länge der Lamellen 9 gleichbleibend oder größer werden, beispielsweise beginnend von der Seitenfläche 11 des horizontalen Profilholz-Elementes 9 beginnend größer werden.

Gemäß der Erfindung ist vorgesehen, dass die mehreren Lamellen 9 pro Profilholz-Element 4, 5 eine Lamellendicke 12 aufweisen, die ausgewählt ist aus einem Bereich von 2 mm bis 10 mm. Die Lamellendicke 12 wird dabei senkrecht auf die für die Anordnung der Beplankung 3 (Fig. 1) vorgesehenen Seitenflächen der Profilholz-Elemente 4, 5 gemessen. Bei der Ausführung als Keilzinkenverbindung ist diese Abmessung die größte Lamellendicke 12, die in der Regel an den Übergängen zwischen den Lamellen 9 (Zinken) vorliegt.

Gemäß einer weiteren und in Fig. 4 ausschnittsweise dargestellten nicht erfndungsgemäßen Ausführungsvariante des Wandelementes 2 kann vorgesehen sein, dass die Profilholz-Elemente 4, 5 nicht auf Gehrung geschnitten werden, wie dies in Fig. 1 dargestellt ist, sondern stumpf aneinanderstoßend miteinander über die Zinkenverbindungen miteinander verbunden werden. Dazu müssen die Lamellen 9 flächenmäßig allerdings größer ausgeführt werden oder es wird die Zinkenverbindung nicht durchgehend über eine gesamte Breite 13 der Profilholz-Elemente 4, 5 ausgeführt, sondern nur über einen Teilbereich dieser Breite 13, beispielsweise ausgewählt aus einem Bereich von 40 % bis 80 % der Breite 13.

Gemäß einer nicht erfndungsgemäßen Ausführungsvariante dazu, die in Fig. 5 dargestellt ist, besteht auch die Möglichkeit, dass in den Rahmenecken 6 (Fig. 1) Zwischenstücke 14 aus Holz oder einem Holzwerkstoff angeordnet werden. Dabei können die Profilholz-Elemente 4, 5 stumpf anstoßend an diese Zwischenstücke 14 angeordnet werden. Die Lamellen 9 können damit bei Bedarf kleiner dimensioniert werden. Anders als bei den voranstehend beschriebenen Ausführungsvarianten des Wandelementes 1 werden bei dieser Ausführungsvariante die Profilholz-Elemente 4, 5 allerdings nicht direkt, d.h. unmittelbar aneinander anliegend, miteinander verbunden.

Eine Höhe 15 der Lamellen 9 (Zinken) beträgt zwischen 20 mm und 50 mm.

Weiter kann vorgesehen sein, dass die Lamellen 9, insbesondere die Lamellen 9 der Keilzinkenverbindung, mit einem Flankenspiel 16 von 0 mm und einem Grundspiel 17 mit einer Höhe 18 zwischen 0,5 mm und 3 mm, insbesondere zwischen 1 mm und 1,5 mm., ausgebildet ist, wie dies in Fig. 7 dargestellt ist. Mit anderen Worten bedeutet dies, dass die Lamellen 9 eine größere Breite aufweisen, als Zwischenräume 19 zwischen den Lamellen 9, jeweils auf gleicher Höhe betrachtet. Damit können die Lamellen 9 nur über einen Teilbereich der Tiefe der Zwischenräume 16 eingesteckt werden, womit das Flankenspiel 16 0 mm und das Grundspiel 17 erhalten wird.

Ein Flankenwinkel 20 kann ausgewählt sein aus einem Bereich von 7 ° bis 35 °, insbesondere aus einem Bereich von 10 ° und 20 °.

Die Rahmen 2 können zur Herstellung eines Modulkörpers eines Baumoduls eingesetzt werden. Dieser Modulkörper umfasst dabei mehrere Rahmen 2 aus in den Rahmenecken 6 miteinander verbundenen Profilholz-Elementen 4, 5. Die Verbindung der Profilholz-Elemente 4, 5 in den Rahmenecken 6 ist als Zinkenverbindung, insbesondere Keilzinkenverbindung, ausgeführt. Dabei kann jeweils ein Rahmen in einer Wand und/oder dem Boden und/oder der Decke des Modulkörpers angeordnet sein. Es ist aber auch möglich, dass die Rahmen 2 jeweils Bestandteil mehrerer Wände und des Bodens und der Decke sind.

Der Ordnung halber sei abschließend darauf hingewiesen, dass zum besseren Verständnis des Aufbaus des Wandelementes 1 dieses bzw. dessen Bestandteile nicht zwingenderweise maßstäblich dargestellt sind.

### Bezugszeichenaufstellung

- 1: Wandelement
- 2: Rahmen
- 3: Beplankung
- 4: Profilholz-Element
- 5: Profilholz-Element

- 6: Rahmenecke
- 7: Überlappungsbereich
- 8: Stirnseite
- 9: Lamelle
- 10: Holzfaser

- 11: Seitenfläche
- 12: Lamellendicke
- 13: Breite
- 14: Zwischenstück
- 15: Höhe

- 16: Seitenfläche
- 17: Lamellendicke
- 18: Breite
- 19: Zwischenstück
- 20: Höhe

## Patentansprüche

1. Wandelement (1) für einen Holzrahmenbau umfassend einen Rahmen (2), der von mehreren horizontalen und vertikalen Profilholz-Elementen (4, 5) gebildet ist, wobei die Profilholz-Elemente (4, 5) in Rahmenecken (6) miteinander verbundenen sind, wobei die Verbindung der Profilholz-Elemente (4, 5) in den Rahmenecken (6) als Zinkenverbindung, insbesondere Keilzinkenverbindung, ausgeführt ist, wobei die Profilholz-Elemente (4, 5) als Vollholzelemente ausgebildet sind, und direkt miteinander verbunden sind, die Zinkenverbindung quer zur Faserrichtung des Holzes der Profilholz-Elemente (4, 5) ausgebildet ist, und wobei die Zinkenverbindungen auf Gehrung geschnittene Profilholz-Elemente (4, 5) aufweisen, und die Zinkenverbindungen mehrere Lamellen (9) pro Profilholz-Element (4, 5) aufweisen, **dadurch gekennzeichnet, dass** auf dem Rahmen auf zumindest einer Seite eine Beplankung (3) befestigt ist, dass weiter eine Lamellendicke (12) ausgewählt ist aus einem Bereich von 2 mm bis 10 mm, und wobei eine Höhe (15) der Lamellen (9) zwischen 20 mm und 50 mm beträgt.

2. Wandelement (1) nach Anspruch 1, **dadurch gekennzeichnet, dass** die Lamellen (9) der Zinkenverbindungen jeweils in Form eines Trapezes ausgeführt sind.

3. Wandelement (1) nach Anspruch 1 oder 2, **dadurch gekennzeichnet, dass** die Lamellen (9) eine viereckige Querschnittsform aufweisen.

4. Baumodul umfassend einen Modulkörper mit mehreren Rahmen (2) die jeweils von mehreren horizontalen und vertikalen Profilholz-Elementen (4, 5) gebildet sind, wobei die Profilholz-Elemente (4, 5) in Rahmenecken (6) miteinander verbundenen sind, wobei die Verbindung der Profilholz-Elemente (4, 5) in den Rahmenecken (6) als Zinkenverbindung, insbesondere Keilzinkenverbindung, ausgeführt ist, wobei die Profilholz-Elemente (4, 5) als Vollholzelemente ausgebildet sind, die Profilholz-Elemente (4, 5) direkt miteinander verbunden sind, und die Zinkenverbindung quer zur Faserrichtung des Holzes der Profilholz-Elemente (4, 5) ausgebildet ist, wobei die Zinkenverbindungen auf Gehrung geschnittene Profilholz-Elemente (4, 5) aufweisen, und die Zinkenverbindungen mehrere Lamellen (9) pro Profilholz-Element (4, 5) aufweisen, **dadurch gekennzeichnet, dass** auf dem Rahmen auf zumindest einer Seite eine Beplankung (3) befestigt ist, wobei eine Lamellendicke (12) ausgewählt ist aus einem Bereich von 2 mm bis 10 mm und wobei eine Höhe (15) der Lamellen (9) zwischen 20 mm und 50 mm beträgt.

5. Verfahren zur Herstellung eines Wandelements (1) für einen Holzrahmenbau, nach dem ein Rahmen (1) aus mehreren horizontalen und vertikalen Profilholz-Elementen (4, 5) gebildet wird, wobei die Profilholz-Elemente (4, 5) in Rahmenecken (6) miteinander verbundenen werden, wobei die Verbindung der Profilholz-Elemente (4, 5) in den Rahmenecken (6) als Zinkenverbindung, insbesondere Keilzinkenverbindung, ausgeführt wird, die als Profilholz-Elemente (4, 5) Vollholzelemente verwendet werden, weiter die Profilholz-Elemente (4, 5) direkt miteinander verbunden werden, und die Zinkenverbindung quer zur Faserrichtung des Holzes der Profilholz-Elemente (4, 5) ausgebildet wird, und die Zinkenverbindungen auf Gehrung geschnittene Profilholz-Elemente (4, 5) aufweisen, wobei für die Zinkenverbindungen mehrere Lamellen (9) pro Profilholz-Element (4, 5) hergestellt werden, **dadurch gekennzeichnet, dass** auf dem Rahmen auf zumindest einer Seite eine Beplankung (3) befestigt wird, und eine Lamellendicke (12) hergestellt wird aus einem Bereich von 2 mm bis 10 mm und eine Höhe (15) der Lamellen (9) zwischen 20 mm und 50 mm beträgt.

## Claims

1. Wall element (1) for a wooden frame construction, comprising a frame (2) which is formed by a plurality of horizontal and vertical profiled wood elements (4, 5), the profiled wood elements (4, 5) being connected to one another in frame corners (6), the connection of the profiled wood elements (4, 5) in the frame corners (6) being designed as a finger-joint connection, in particular a finger-joint connection with wedge-shaped fingers, the profiled wood elements (4, 5) being designed as solid wood elements and being connected directly to one another, the finger-joint connection is formed transversely to the grain direction of the wood of the profiled wood elements (4, 5), and wherein the finger-joint connections have miter-cut profiled wood elements (4, 5), and the finger-joint connections have a plurality of lamellae (9) per profiled wood element (4, 5), **characterized in that** a planking (3) is fastened to the frame on at least one side, **in that** furthermore a lamella thickness (12) is selected from a range of 2 mm to 10 mm, and wherein a height (15) of the lamellae (9) is between 20 mm and 50 mm.

2. Wall element (1) according to claim 1, **characterized in that** the lamellae (9) of the finger-joint connections are each designed in the form of a trapezoid.

3. Wall element (1) according to claim 1 or 2, **characterized in that** the lamellae (9) have a quadrangular cross-sectional shape.

4. Construction module comprising a module body with a plurality of frames (2) which are each formed by a plurality of horizontal and vertical profiled wood elements (4, 5), the profiled wood elements (4, 5) being connected to one another in frame corners (6), wherein the connection of the profiled wood elements (4, 5) in the frame corners (6) is designed as a finger-joint connection, in particular a finger-joint connection with wedge-shaped fingers, wherein the profiled wood elements (4, 5) are designed as solid wood elements, the profiled wood elements (4, 5) are directly connected to one another, and the finger-joint connection is formed transversely to the grain direction of the wood of the profiled wood elements (4, 5), the finger-joint connections having mitre-cut profiled wood elements (4, 5), and the finger-joint connections having a plurality of lamellae (9) per profiled wood element (4, 5), **characterized in that** a planking (3) is fastened to the frame on at least one side, wherein a lamella thickness (12) is selected from a range of 2 mm to 10 mm and wherein a height (15) of the lamellae (9) is between 20 mm and 50 mm.

5. Method for producing a wall element (1) for a wooden frame construction, according to which a frame (1) is formed from a plurality of horizontal and vertical profiled wood elements (4, 5), the profiled wood elements (4, 5) being connected to one another in frame corners (6), wherein the connection of the profiled wood elements (4, 5) in the frame corners (6) is realized as a finger-joint connection, in particular a finger-joint connection with wedge-shaped fingers, solid wood elements are used as profiled wood elements (4, 5), furthermore the profiled wood elements (4, 5) are directly connected to each other, and the finger-joint connection is formed transversely to the grain direction of the wood of the profiled wood elements (4, 5), and the finger-joint connections have miter-cut profiled wood elements (4, 5), wherein a plurality of lamellae (9) per profiled wood element (4, 5) are produced for the finger-joint connections, **characterized in that** a planking (3) is fastened to the frame on at least one side, and a lamella thickness (12) is produced from a range of 2 mm to 10 mm and a height (15) of the lamellae (9) is between 20 mm and 50 mm.

## Revendications

1. Élément de paroi (1) pour une construction à ossature bois, comprenant un cadre (2), qui est constitué de plusieurs éléments en bois profilés horizontaux et verticaux (4, 5), dans lequel les éléments en bois profilés (4, 5) sont reliés entre eux dans des angles du cadre (6), dans lequel l'assemblage des éléments en bois profilés (4, 5) dans les angles du cadre (6) est conçu comme un assemblage à queue d'aronde, plus particulièrement un assemblage à dents collées, dans lequel les éléments en bois profilés (4, 5) sont conçus comme des éléments en bois massif et sont reliés directement entre eux, l'assemblage à queue d'aronde est réalisé transversalement par rapport à la direction des fibres du bois des éléments en bois profilés (4, 5), dans lequel les assemblages à queues d'aronde comprennent des éléments en bois profilés (4, 5) coupés en onglet et les assemblages à queues d'aronde comprennent plusieurs lamelles (9) par élément en bois profilé (4, 5), **caractérisé en ce que**, sur le cadre, sur au moins un côté, est fixé un placage (3), **en ce que**, en outre, une épaisseur de lamelle (12) est choisie dans un intervalle entre 2 mm et 10 mm et dans lequel une hauteur (15) des lamelles (9) est entre 20 mm et 50 mm.

2. Élément de paroi (1) selon la revendication 1, **caractérisé en ce que** les lamelles (9) des assemblages à queues d'aronde sont réalisés chacun sous la forme d'un trapèze.

3. Élément de paroi (1) selon la revendication 1 ou 2, **caractérisé en ce que** les lamelles (9) présentent une section transversale quadrangulaire.

4. Module de construction comprenant un corps de module avec plusieurs cadres (2) qui sont constitués chacun de plusieurs éléments en bois profilés horizontaux et verticaux (4, 5), dans lequel les éléments en bois profilés (4, 5) sont reliés entre eux dans des angles du cadre (6), dans lequel l'assemblage des éléments en bois profilés (4, 5) dans les angles du cadre (6) est conçu comme un assemblage à queue d'aronde, plus particulièrement un assemblage à dents collées, dans lequel les éléments en bois profilés (4, 5) sont conçus comme des éléments en bois massif, les éléments en bois profilés (4, 5) sont reliés directement entre eux et l'assemblage à queue d'aronde est réalisé transversalement par rapport à la direction des fibres du bois des éléments en bois profilés (4, 5), dans lequel les assemblages à queues d'aronde comprennent des éléments en bois profilés (4, 5) coupés en onglet et les assemblages à queues d'aronde comprennent plusieurs lamelles (9) par élément en bois profilé (4, 5), **caractérisé en ce que**, sur le cadre, sur au moins un côté, est fixé un placage (3), dans lequel une épaisseur de lamelle (12) est choisie dans un intervalle entre 2 mm et 10 mm et dans lequel une hauteur (15) des lamelles (9) est entre 20 mm et 50 mm.

5. Procédé de fabrication d'un élément de paroi (1) pour une construction à ossature bois, selon lequel un cadre (1) est constitué de plusieurs éléments en bois profilés horizontaux et verticaux (4, 5), dans lequel les éléments en bois profilés (4, 5) sont reliés entre eux dans des angles du cadre (6), dans lequel l'assemblage des éléments en bois profilés (4, 5) dans les angles du cadre (6) est conçu comme un assemblage à queue d'aronde, plus particulièrement un assemblage à dents collées, les éléments en bois profilés (4, 5) utilisés sont des éléments en bois massif, en outre les éléments en bois profilés (4, 5) sont reliés directement entre eux et l'assemblage à queue d'aronde est réalisé transversalement par rapport à la direction des fibres du bois des éléments en bois profilés (4, 5) et les assemblages à queues d'aronde comprennent des éléments en bois profilés (4, 5) coupés en onglet, dans lequel, pour les assemblages à queues d'aronde plusieurs lamelles (9) sont réalisées pour chaque élément en bois profilé (4, 5), **caractérisé en ce que**, sur le cadre, sur au moins un côté, est fixé un placage (3) et une épaisseur de lamelle (12) est choisie dans un intervalle entre 2 mm et 10 mm et dans lequel une hauteur (15) des lamelles (9) est entre 20 mm et 50 mm.
